# FASCICULE DE BREVET EUROPEEN

(11) **EP 1 515 593 B1**
(45) Date de publication et mention de la délivrance du brevet: **21.07.2010**
(21) Numéro de dépôt: 04077515.7
(22) Date de dépôt: 10.09.2004
(51) Int. Cl.: H05B 39/08, H05B 37/02, G08C 19/28

(54) **Procédé et dispositif de configuration d'un dispositif de contrôle d'équipements**
Verfahren und Gerät zur Konfigurierung eines Kontrollgerätes für eine Einrichtung
Method and apparatus for configuring an equipment control apparatus

(30) Priorité: 15.09.2003 FR 0310810
(43) Date de publication de la demande: 16.03.2005
(73) Titulaire: DELTA DORE Société Anonyme, F-35270 Combourg (FR)
(72) Inventeur: Le Tutour, Jean, 22690 Pleudihen-sur-Rance (FR); Bodin, Pascal, 35700 Rennes (FR); Villalard, Erwan, 35000 Rennes (FR)
(74) Mandataire: Maillet, Alain

(56) Documents cités:
- EP-A- 0 503 699
- US-B1- 6 169 377

## Description

La présente invention concerne un procédé et un dispositif de configuration d'un dispositif de contrôle d'équipements.

Plus précisément, l'invention s'applique au domaine de la commande à distance d'équipements électriques à partir d'une télécommande générant au moins une trame de données à destination d'un dispositif de contrôle d'équipement électrique pour activer ou désactiver l'équipement électrique ou mettre l'équipement électrique dans un état prédéterminé.

Nous entendons ici par état, une configuration d'un équipement dans un état prédéfini comme par exemple un éclairage selon une puissance donnée, une ouverture partielle ou totale de volets roulants, la mise en fonctionnement d'un chauffage dans un mode de fonctionnement particulier, la configuration d'une centrale d'alarme selon un mode de fonctionnement prédéfini. Cet état prédéterminé est prédéfini préalablement par l'usager d'un tel système.

Les automatismes couramment utilisés dans le bâtiment mettent en oeuvre des dispositifs de commande et d'actionnement, qui après une mise en configuration, permettent de remplir plusieurs fonctions, telles que, par exemple, une commande d'éclairage ou de chauffage ou de montée et de descente de volets roulants.

Par exemple, il existe des télécommandes radio permettant de contrôler deux dispositifs d'actionnement d'équipements électriques. Chaque dispositif d'actionnement comporte une roue codeuse permettant de définir un identifiant au dispositif d'actionnement. La télécommande radio, en générant un signal comportant un identifiant, commande les dispositifs d'actionnement d'équipements électriques ayant le même identifiant.

La télécommande radio permet des contrôles tels que la commande et la variation à distance d'un éclairage, la commande à distance d'un portail et/ou d'une porte de garage.

Ces télécommandes radio ne permettent pas la mise dans un état prédéterminé des équipements électriques suite à une seule ou simple action sur la télécommande. En effet, l'utilisateur de telles télécommandes radio ne peut pas commander à distance la mise des équipements électriques dans un état prédéterminé car de tels systèmes ne sont pas aptes à mémoriser de tels états. L'utilisateur doit donc, en appuyant sur les différentes touches de la télécommande, mettre à chaque fois qu'il le désire, les équipements électriques dans l'état qu'il désire. Ces systèmes sont ainsi peu attractifs et nécessitent un nombre important de manipulations des utilisateurs.

Sont connus aussi des systèmes de contrôle de dispositifs d'actionnement d'équipements électriques à partir d'un contrôleur constitué d'un ordinateur et d'un logiciel particulier.

Dans ce système, chaque dispositif de contrôle d'équipement électrique a une adresse particulière et le contrôleur transmet sur le réseau de fourniture électrique une commande à l'adresse du dispositif de contrôle d'équipement électrique que l'on désire contrôler. Seul le dispositif de contrôle d'équipement électrique possédant la même adresse exécute la commande. Si plusieurs dispositifs d'actionnement d'équipement électrique possèdent la même adresse, chacun des modules exécutera la commande.

Selon ce système, il est possible de programmer un ensemble de commandes qui permet par exemple, lorsque l'utilisateur rentre à son domicile, d'allumer la lumière extérieure, la lumière de l'entrée et du salon de son domicile tout en commandant le chauffage dans un mode confort, ou de définir, lorsque l'utilisateur est absent, des séquences d'ouverture ou de fermeture de volets roulants simulant la présence de l'utilisateur à son domicile.

Ce type de système comporte un certain nombre de problèmes. L'utilisateur d'un tel système doit impérativement posséder un ordinateur, ce qui augmente d'autant plus le coût d'un tel système.

De plus, l'utilisateur d'un tel système doit aussi être familier à l'utilisation d'un ordinateur, ce qui nécessairement rebute un certain nombre d'utilisateurs potentiels de tels systèmes.

Enfin, lorsque plusieurs personnes vivent dans un même domicile, l'ensemble des personnes seront soumises à la programmation de l'utilisateur privilégié. Si les personnes autres que l'utilisateur privilégié ont des préférences particulières pour la création d'un environnement, elles devront alors aussi avoir recours à l'ordinateur pour modifier les commandes et les scénarii crées par l'utilisateur.

Le document EP 0503 699 décrit un système de commande d'un dispositif de contrôle d'équipements commandé par un dispositif de commande distant.

Ainsi, ce système n'est pas flexible et peu adapté aux différents scénario que souhaite effectuer chaque personne vivant dans un même domicile.

L'invention a pour but de résoudre les inconvénients de l'art antérieur en proposant un procédé de configuration d'un dispositif de contrôle d'équipement, le dispositif de contrôle d'équipement étant entre autres commandé par un dispositif de commande distant **caractérisé en ce que** le procédé comporte les étapes, effectuées au niveau du dispositif de contrôle d'équipement, de mise dans un mode de configuration du dispositif de contrôle, de réception d'au moins une trame de données générée par le dispositif de commande distant, la trame de données comportant au moins un identifiant associé au dispositif de commande et des informations représentatives du type de commande générée par le dispositif de commande distant et de mémorisation de l'identifiant associé au dispositif de commande et des informations représentatives du type de commande générée par le dispositif de commande distant.

Corrélativement, l'invention propose un dispositif de contrôle d'équipement, le dispositif de contrôle d'équipement étant entre autres commandé par un dispositif de commande distant **caractérisé en ce que** le dispositif de contrôle d'équipement comporte des moyens de mise du dispositif de contrôle dans un mode de configuration, des moyens de réception d'au moins une trame de données générée par le dispositif de commande distant, la trame de données comportant au moins un identifiant associé au dispositif de commande et des informations représentatives du type de commande générée par le dispositif de commande distant et des moyens de mémorisation de l'identifiant associé au dispositif de commande et des informations représentatives du type de commande générée par le dispositif de commande distant.

Ainsi, l'association entre un dispositif de commande distant tel que par exemple une télécommande avec un dispositif de contrôle est réalisée de façon simple.

De plus, le dispositif de contrôle en recevant et en mémorisant l'identifiant associé au dispositif de commande et les informations représentatives du type de commande générée par le dispositif de commande distant est alors apte à traiter différents types de commandes.

Plus précisément, le type de commande générée par le dispositif de commande distant est représentatif du nombre de touches associées à ladite commande.

Avantageusement, une unique touche du dispositif de commande est associée à une commande pour commander le contrôle de l'équipement dans un état prédéterminé.

Ainsi, il est possible de créer des scénarii. L'utilisateur, par un simple appui sur une touche, commande les équipements pour que ceux-ci se mettent dans l'état qu'il souhaite.

Plus précisément, l'équipement est un équipement électrique et le dispositif de contrôle modifie l'énergie électrique délivrée audit équipement électrique pour contrôler ledit équipement électrique.

Ainsi, l'utilisateur d'un tel système, en ajustant la quantité d'énergie délivrée à l'équipement électrique et en générant au moins une trame de données par l'intermédiaire d'un appui sur une touche du dispositif de commande distant, assigne de façon simple un état prédéterminé à l'équipement électrique à chaque appui sur la touche du dispositif de commande distant.

Plus précisément, la ou chaque trame de données comporte en outre un indice représentatif d'une commande parmi un ensemble de commandes de même type que le dispositif de commande distant est apte à générer et en ce que l'indice est aussi mémorisé.

Ainsi, il est possible d'avoir des dispositifs de commande regroupant plusieurs commandes de même type tout en permettant au dispositif de contrôle leur différenciation.

Plus précisément, l'état prédéterminé est l'état de l'équipement lors de la configuration du dispositif de contrôle et en ce que des informations représentatives de l'état de l'équipement électrique lors de la configuration du dispositif de contrôle sont mémorisées.

L'état de l'équipement électrique étant mémorisé, l'utilisateur n'a plus besoin d'effectuer cette opération par la suite.

De plus, en ajustant l'équipement dans un état prédéterminé, en mettant le dispositif de commande de l'équipement dans un mode de configuration et en appuyant sur une touche d'un dispositif de commande, on associe le dispositif de commande au dispositif de contrôle et on mémorise un état de l'équipement de façon très simple.

Plus particulièrement, la trame de données reçue est une trame radio.

Ainsi, l'utilisateur peut commander le dispositif de contrôle d'une autre pièce que celle dans laquelle est situé le dispositif de contrôle.

Avantageusement, on active au moins un moyen de signalisation lorsque le dispositif de contrôle est dans le mode de configuration.

Ainsi, l'utilisateur reçoit une confirmation de la mise du dispositif de contrôle dans le mode de configuration.

Avantageusement, on met le dispositif de contrôle d'équipement dans un mode de contrôle de l'équipement suite à la mémorisation des données comprises dans la trame reçue ou des données comprises dans une trame reçue et des informations représentatives de l'état de l'équipement électrique lors de la configuration du dispositif de contrôle.

Plus précisément, préalablement à la mémorisation des données comprises dans une trame reçue ou des données comprises dans une trame reçue et des informations représentatives de l'état de l'équipement lors de la configuration du dispositif de contrôle, on détermine l'existence parmi les données précédemment mémorisées de données identiques aux données comprises dans une trame reçue, on mémorise des données comprises dans la trame reçue ou des données comprises dans la trame reçue et des informations représentatives de l'état de l'équipement électrique lors de la configuration du dispositif de contrôle, dans une zone mémoire distincte de chaque zone mémoire comprenant les données précédemment mémorisées s'il n'existe pas parmi des données précédemment mémorisées de données identiques aux données comprises dans la trame reçue et s'il existe parmi les données précédemment mémorisées des données identiques aux données comprises dans la trame reçue, on mémorise des données comprises dans la trame reçue ou des données comprises dans la trame reçue et des informations représentatives de l'état de l'équipement électrique lors de la configuration du dispositif de contrôle dans la zone mémoire comprenant les données identiques précédemment mémorisées.

Ainsi, il est possible de commander un dispositif de contrôle d'un appareil avec plusieurs dispositifs de commande. En disposant de plusieurs dispositifs de commande tels que des télécommandes, il est possible pour chaque individu d'une même famille de commander les appareils selon ses propres souhaits. Chaque individu disposant d'une commande peut alors mettre à l'aide de cette télécommande plusieurs appareils dans l'état prédéterminé qu'il aura précédemment configurés.

L'invention concerne aussi un procédé de contrôle d'un équipement par un dispositif de contrôle, le dispositif de contrôle étant entre autres commandé par au moins un dispositif de commande distant caractérisé en ce que le procédé comporte les étapes, effectuées par le dispositif de contrôle, de réception d'au moins une trame de données générée par un dispositif de commande distant, la trame de données comportant au moins un identifiant associé au dispositif de commande et des informations représentatives du type de commande générée par le dispositif de commande distant, de détermination de l'existence parmi les données précédemment mémorisées de données identiques à une partie des données comprises dans la trame reçue comportant au moins l'identifiant et si des données identiques existent, de contrôle de l'équipement en fonction d'informations associées aux données mémorisées identiques à la partie des données comprises dans la trame reçue, les informations étant représentatives d'un état de l'équipement ou de contrôle de l'équipement en fonction d'une autre partie des données comprises dans la trame reçue.

Corrélativement, l'invention propose un dispositif de contrôle d'un équipement, le dispositif de contrôle étant entre autres commandé par au moins un dispositif de commande distant caractérisé en ce que le dispositif de contrôle comporte des moyens de réception d'au moins une trame de données générée par un dispositif de commande distant, la trame de données comportant au moins un identifiant associé au dispositif de commande et des informations représentatives du type de commande générée par le dispositif de commande distant, des moyens de détermination de l'existence parmi les données précédemment mémorisées de données identiques à une partie des données comprises dans la trame reçue comportant au moins l'identifiant et des moyens de contrôle de l'équipement en fonction d'informations associées aux données mémorisées identiques à la partie des données comprises dans la trame reçue, les informations étant représentatives d'un état de l'équipement, ou en fonction d'une autre partie des données comprises dans la trame reçue.

L'invention concerne aussi un procédé de commande d'un dispositif de contrôle par un dispositif de commande distant, le dispositif de contrôle contrôlant un équipement électrique, **caractérisé en ce que** le procédé comporte les étapes, effectuées par le dispositif de commande distant, de détection d'au moins un appui sur au moins une touche du dispositif de commande distant et de transfert d'au moins une trame de données comportant au moins un identifiant associé au dispositif de commande et des informations représentatives du type de commande générée par le dispositif de commande distant.

Corrélativement, l'invention propose un dispositif de commande distant d'un dispositif de contrôle d'un équipement électrique, **caractérisé en ce que** le dispositif de commande distant comporte des moyens de détection d'au moins un appui sur au moins une touche du dispositif de commande distant et des moyens de transfert d'au moins une trame de données comportant au moins un identifiant associé au dispositif de commande et des informations représentatives du type de commande générée par le dispositif de commande distant.

Les avantages des dispositifs et du programme d'ordinateur étant identiques aux avantages du procédé selon l'invention, ceux-ci ne seront pas rappelés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la. Fig. 1 représente un réseau de configuration et de commande de dispositifs d'actionnement d'équipements ;
la Fig. 2 représente une vue schématique d'un dispositif de contrôle d'équipements ;
la Fig. 3 représente un algorithme de configuration d'un dispositif de contrôle d'équipements exécuté par un dispositif de contrôle d'équipements ;
la Fig. 4 représente un algorithme de contrôle d'un équipement exécuté par un dispositif de contrôle d'équipements.

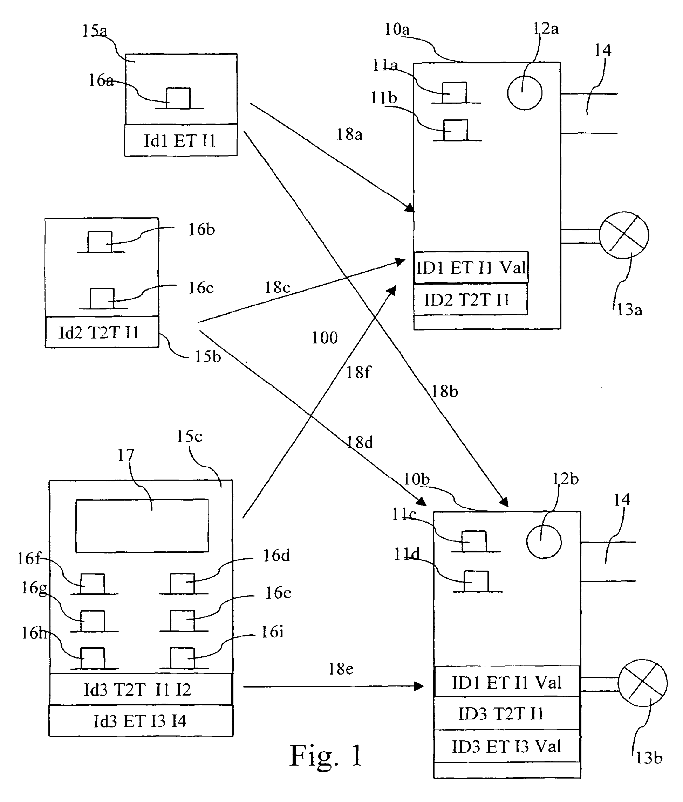

La Fig. 1 représente un réseau de configuration et de commande de dispositifs d'actionnement d'équipements électriques.

Le réseau 100 de la Fig. 1 est un réseau domotique d'une habitation par exemple. Ce réseau 100 permet à un utilisateur de configurer des dispositifs de contrôle 10a et 10b d'équipements 13a et 13b et d'actionner les équipements 13a et 13b par l'intermédiaire de dispositifs de commande 15a, 15b et 15c et des dispositifs de contrôle 10a et 10b.

Les équipements 13a et 13b sont par exemple des équipements de chauffage, des équipements de surveillance ou des équipements électriques tels que des équipements d'éclairage, des volets roulants ou tout type d'équipements électriques pouvant être contrôlés par le dispositif de contrôle en modifiant l'énergie électrique délivrée audit équipement électrique. Il est à remarquer que tout type d'équipements peut être commandé par la présente invention.

Les dispositifs de commande sont préférentiellement des télécommandes, et pourraient être aussi des capteurs de présence, de luminosité ou des capteurs sonores.

Par souci de simplification, un nombre restreint de télécommandes 15, de dispositifs de contrôle 10 et d'équipements tels que des équipements électriques 13 sont représentés en Fig. 1. Bien entendu, l'invention telle que décrite est apte à fonctionner avec un nombre plus limité ou plus important de télécommandes 15, de dispositifs de contrôle 10 et d'équipements électriques 13.

Dans le réseau 100, plusieurs télécommandes 15a, 15b et 15c sont prévues pour commander les dispositifs de contrôle 10a et 10b.

Chaque télécommande 15 comporte un identifiant unique respectif. Cet identifiant est par exemple mémorisé dans chaque télécommande 15 lors de la fabrication de celle-ci. Chaque télécommande 15 comporte aussi des informations représentatives du type de commande générée par la télécommande 15. Ces commandes sont par exemple des commandes de type activation/désactivation d'un équipement électrique 13 par l'intermédiaire de deux touches du dispositif de commande 15 ou une commande de mise d'un équipement électrique dans un état prédéterminé préalablement défini par l'utilisateur du réseau 100 et cela par l'intermédiaire d'une unique touche du dispositif de commande 15. Chaque télécommande comporte en outre un indice associé à chaque commande de la télécommande 15. Cet indice est ainsi représentatif d'une commande parmi un ensemble de commandes que la télécommande 15 est apte à générer. Il est à remarquer que si la télécommande 15 ne comporte qu'une unique touche, un indice peut ne pas être associé à la touche de la télécommande.

Les télécommandes 15a, 15b et 15c sont des télécommandes aptes à émettre des trames de données radio à destination des dispositifs de contrôle d'équipements 10. Il est à remarquer que les télécommandes 15 peuvent aussi émettre des trames des données sous forme infrarouge, sur un réseau filaire indépendant du réseau de fourniture d'énergie électrique de l'habitation dans laquelle l'invention est implémentée ou sur le réseau de fourniture d'énergie électrique de l'habitation selon la technique des courants porteurs. Les télécommandes 15 peuvent être des dispositifs de commande mobiles, c'est-à-dire être sous forme de boîtier que l'utilisateur est susceptible de déplacer dans l'habitation. Les télécommandes 15 peuvent aussi être intégrées dans les cloisons de l'habitation.

La télécommande 15a comporte une unique touche 16a. La télécommande 15a est une télécommande apte à commander des dispositifs de contrôle 10 pour mettre un ou plusieurs équipements dans un état prédéterminé.

La télécommande 15a comporte un identifiant noté Id1, une information indiquant que la commande est une commande de mise d'équipement dans un état prédéterminé noté ET et d'un indice associé à la commande notée I1.

La télécommande 15a transmet, suite à l'appui sur la touche 16a par l'utilisateur, une trame de données radio à destination des dispositifs de contrôle 10a et 10b. La transmission de cette trame est représentée par les flèches notées 18a et 18b.

Cette trame comporte l'identifiant noté ID1, l'information ET et l'indice I1. La trame de données peut comporter en outre une valeur booléenne représentative de l'appui sur la touche 16a.

Si le dispositif de commande 15a est un capteur, celui-ci à la détection d'un événement prédéterminé génère le même type de trame de données que celle précédemment décrite.

La télécommande 15b comporte deux touches notées 16b et 16c. La télécommande 16b est une télécommande apte à commander des dispositifs 10 de contrôle selon des commandes d'activation/désactivation d'équipements électriques. Le type de commande générée par la télécommande est une commande à deux touches.

La télécommande 15b comporte un identifiant noté Id2, une information indiquant que la commande est une commande d'activation ou désactivation notée T2T et d'un indice noté I1 associé à la commande.

La télécommande 15b transmet, suite à l'appui sur la touche 16b par l'utilisateur, une trame de données radio comportant l'identifiant ID2, l'information T2T et l'indice I1, à destination des dispositifs de contrôle 10a et 10b. La transmission de cette trame est représentée par les flèches notées 18c et 18d. La touche 16b permet par exemple l'activation d'un appareil électrique, ou d'être par exemple une commande pour l'activation de la remontée d'un volet roulant ou l'augmentation de l'énergie électrique délivrée à un équipement d'éclairage.

La télécommande 15b transmet, suite à l'appui sur la touche 16c par l'utilisateur, une trame de données radio comportant l'identifiant ID2, l'information T2T et l'indice 12, à destination des dispositifs de contrôle 10a et 10b. La transmission de cette trame est représentée par les flèches notées 18c et 18d. La touche 16c permet par exemple la désactivation d'un appareil électrique, ou d'être par exemple une commande pour l'activation de la descente d'un volet roulant ou la réduction de l'énergie électrique délivrée à un équipement d'éclairage.

Il est à remarquer que chaque trame de données transmise comporte en outre deux informations booléennes représentatives des appuis sur les touches de la télécommande 15b. Lorsque par exemple la touche 16c est appuyée, la trame de données comporte ainsi les informations binaires 0 et 1 représentatives du non-appui sur la touche 16b et d'un appui sur la touche 16c.

La télécommande 15c est une télécommande apte à contrôler une pluralité d'équipements et permet la génération de différents types de commandes.

La télécommande 15c comporte un écran 17 apte à visualiser des messages représentatifs de commandes générées par l'utilisateur de la télécommande 15c suite à un appui sur une touche.

La télécommande 15c comporte par exemple six touches notées 16d à 16i. Les touches 16d et 16e sont, selon cet exemple, des touches associées à une commande pour activer/désactiver un équipement électrique. Les touches 16f et 16g sont aussi des touches associées à une commande pour activer/désactiver un équipement électrique. Enfin, chaque touche 16h ou 16i est une touche associée à une commande pour commander le contrôle d'un équipement dans un état prédéterminé.

La télécommande 15c transmet, suite à l'appui sur une touche 16d ou 16e par l'utilisateur, une trame de données radio comportant l'identifiant Id3, l'information T2T, l'indice I1 associé à la commande et deux informations booléennes représentatives d'un appui sur une ou les touches 16d ou 16e.

La télécommande 15c transmet, suite à l'appui sur une touche 16f ou 16g par l'utilisateur, une trame de données radio comportant l'identifiant Id3, l'information T2T, l'indice I2 associé à la commande et deux informations booléennes représentatives d'un appui sur une ou les touches 16f ou 16g.

La télécommande 15c transmet, suite à l'appui sur la touche 16h par l'utilisateur, une trame de données radio comportant l'identifiant ID3, l'information ET, et l'indice I3 associé à la commande pour commander le contrôle d'un équipement dans un état prédéterminé.

La télécommande 15c transmet, suite à l'appui sur la touche 16i par l'utilisateur, une trame de données radio comportant l'identifiant ID3, l'information ET, et l'indice I4 associé à la commande pour commander le contrôle d'un équipement dans un état prédéterminé.

Le dispositif de contrôle 10a est placé entre le réseau de distribution d'énergie électrique 14 de l'habitation et l'équipement électrique 13a.

Le dispositif de contrôle 10a comporte par exemple deux touches notées 11a et 11b. La touche 11a permet par exemple l'activation de l'appareil électrique 13a, ou est par exemple une commande pour l'activation de la montée d'un volet roulant ou l'augmentation de l'énergie électrique délivrée à un équipement d'éclairage. La touche 11b permet par exemple la désactivation de l'appareil électrique 13a, ou est par exemple une commande pour l'activation de la descente d'un volet roulant ou la réduction de l'énergie électrique délivrée à un équipement d'éclairage. Les touches 11a et 11b dans un mode dit de contrôle permettent de modifier l'énergie électrique délivrée à l'équipement électrique 13a.

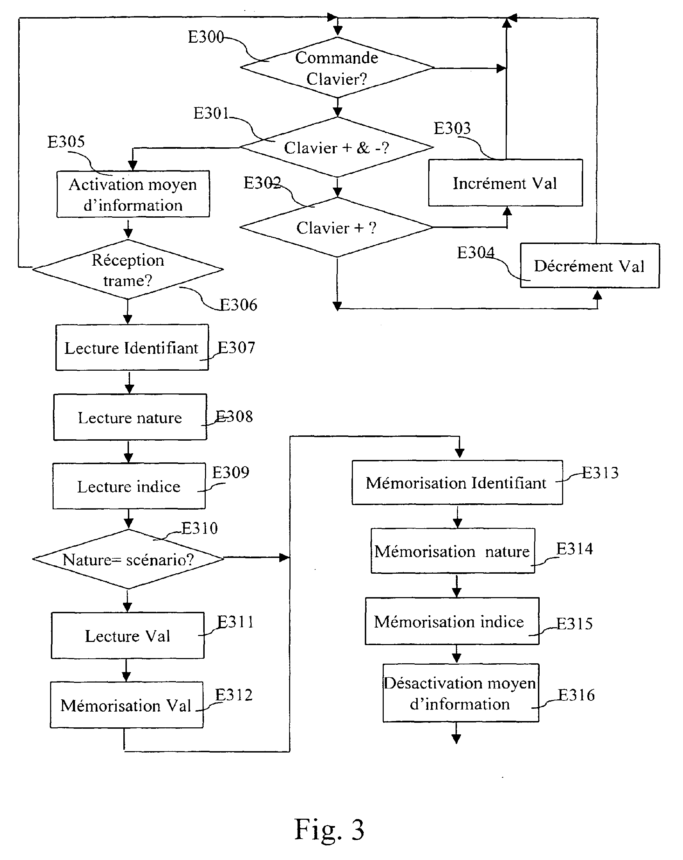

Selon un mode particulier de l'invention, un appui simultané sur les touches 11a et 11b provoque la mise du dispositif de contrôle 10a dans un mode de configuration. Ceci sera décrit plus en détail en référence à la Fig. 3.

Le dispositif de contrôle 10a comporte un moyen de signalisation 12a, par exemple une diode électroluminescente qui clignote lorsque le dispositif de contrôle 10a est dans le mode de configuration. Bien entendu, la diode électroluminescente peut être associée ou remplacée par un transducteur électroacoustique qui génère un signal sonore lorsque le dispositif de contrôle 10a est dans le mode de configuration.

Le dispositif de contrôle 10a est configuré pour effectuer des actions suite à la réception de trames issues des dispositifs de commande 15a et 15b. Le dispositif de contrôle 10a comporte en mémoire l'identifiant ID1, l'information ET, l'indice I1 ainsi qu'une valeur d'état associée notée Val. Le dispositif de contrôle 10a comporte aussi en mémoire l'identifiant ID2, l'information T2T, l'indice I1 associé à cette commande. La configuration et la mémorisation de ces données seront décrites plus en détail à la Fig. 3.

Le dispositif de contrôle 10b est placé entre le réseau de distribution d'énergie électrique 14 de l'habitation et l'équipement électrique 13b.

Les touches 11c et 11d ont une fonction similaire aux touches 11a et 11b. Elles ne seront pas plus décrites.

Le moyen de signalisation 12b a une fonction similaire au moyen de signalisation 12a. Il ne sera pas plus décrit.

Le dispositif de contrôle 10b est par exemple configuré pour effectuer des actions suite à la réception de trames issues des dispositifs de commande 15a et 15c. Le dispositif de contrôle 10b comporte en mémoire l'identifiant ID1, l'information ET, l'indice I1, ainsi qu'une valeur d'état associée notée Val. Le dispositif de contrôle 10b comporte aussi en mémoire l'identifiant ID3, l'information T2T et l'indice I1 permettant de commander l'activation de l'équipement électrique 13b. Le dispositif de contrôle 10b comporte aussi en mémoire l'identifiant ID3, l'information ET, l'indice I3 associé à la commande de la touche 16i permettant de commander la mise dans un état prédéterminé de l'équipement électrique 13b.

La configuration et la mémorisation de ces données seront décrites plus en détail à la Fig. 3.

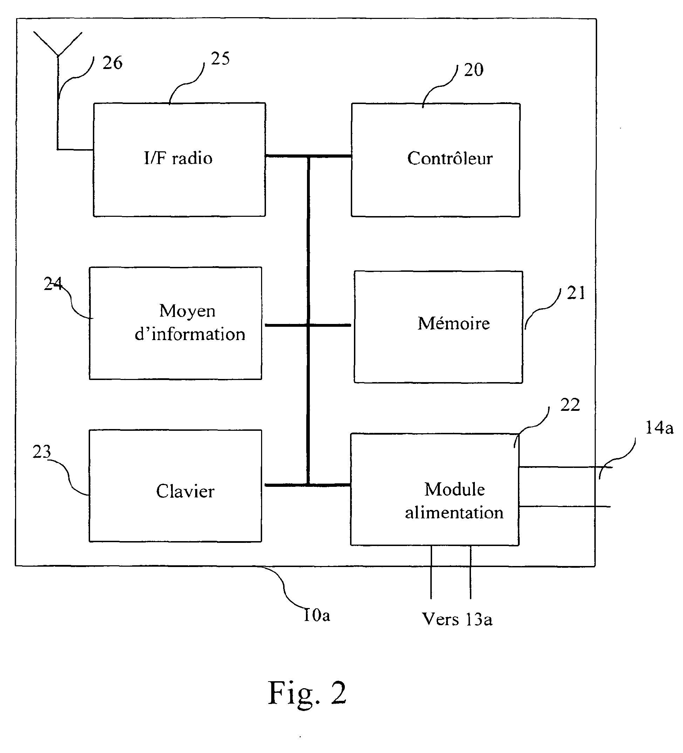

La **Fig. 2** représente une vue schématique d'un dispositif de contrôle d'équipements électriques.

Le dispositif de contrôle d'équipements électriques 10b étant identique au dispositif de contrôle d'équipements électriques 10a, seul le dispositif de contrôle 10a sera décrit.

Le dispositif de contrôle d'équipements électriques 10a est constitué d'un contrôleur 20 apte à lire et/ou à mémoriser des données dans une mémoire 21, à contrôler le module d'alimentation 22 de l'équipement électrique 13a, le clavier constitué d'au moins des deux touches 11a et 11b, le moyen d'information 24 constitué de la diode électroluminescente 12a, et d'une interface radio reliée à une antenne 26 permettant de recevoir des trames de données des télécommandes 15.

Bien entendu, lorsque l'invention utilise, pour la transmission de trames de données, un médium infrarouge ou les courants porteurs, l'antenne 26 et l'interface 25 sont remplacées par des capteurs et une interface correspondant au médium utilisé.

Il est à remarquer que les éléments 20 à 25 peuvent être intégrés dans un ou plusieurs composants dédiés ou programmés.

La mémoire 21 mémorise entre autres les identifiants, les informations représentatives du type de commande générée par les télécommandes pour lesquelles le dispositif de contrôle 10a a été configuré pour effectuer des actions suite à la réception d'une trame de données générée par ces télécommandes.

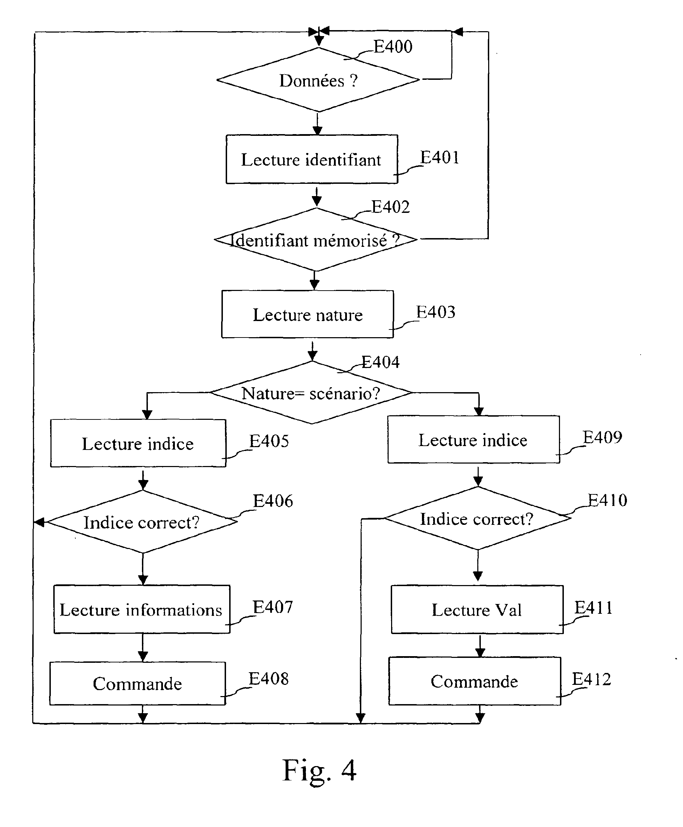

Préférentiellement, le dispositif de contrôle comporte un contrôleur apte à exécuter les instructions du programme correspondant aux algorithmes tels que décrits aux Figs. 3 et 4. Dans cette variante, les instructions sont mémorisées dans la mémoire 21.

En variante, le dispositif de contrôle 10a est réalisé à l'aide de composants électroniques fonctionnant selon un diagramme d'état conforme aux algorithmes tels que décrits ultérieurement aux Figs. 3 et 4.

La Fig. 3 représente un algorithme de configuration d'un dispositif de contrôle d'équipements exécuté par un dispositif de contrôle d'équipements.

Le contrôleur 20 du dispositif de contrôle d'équipements 10a lit à partir de la mémoire 21 les instructions du programme correspondant aux étapes E300 à E316 de la Fig. 3 et les charge en mémoire vive non représentée pour les exécuter.

Le contrôleur 20 du dispositif de contrôle 10a exécute périodiquement les étapes E300 à E316 de l'algorithme de la Fig. 3.

A l'étape E300, le contrôleur 20 attend l'appui sur au moins une touche 11a ou 11b du dispositif de contrôle 10a.

Lorsqu'un appui est détecté, le contrôleur 20 passe ensuite à l'étape suivante E301. Cette étape consiste à déterminer si le dispositif de contrôle 10a doit passer dans le mode de configuration ou non.

Selon un mode préféré de l'invention, l'appui simultané sur les touches 11a et 11b est représentatif du passage dans le mode de configuration. Lorsque seulement une des touches 11a et 11b est appuyée, le contrôleur 20 passe à l'étape suivante E302.

A cette étape, le contrôleur 20 vérifie si la touche d'incrémentation, par exemple la touche 11a a été actionnée. Dans l'affirmative, le contrôleur 20 incrémente à l'étape E303 la variable notée Val d'une unité et transfère cette variable au module d'alimentation 22 pour que celui-ci augmente l'énergie électrique délivrée a l'équipement électrique 13a.

Cette étape effectuée, le contrôleur 20 retourne à l'étape E300 précédemment décrite en attente d'une nouvelle action sur le clavier 23 du dispositif de contrôle ou pour vérifier si la touche 11a est toujours actionnée. Dans ce cas, les étapes E300 à E303 sont effectuées de la même manière que celle précédemment décrite.

Si la touche de décrémentation 11b est actionnée, le contrôleur 20 décrémente à l'étape E304 la variable notée Val d'une unité et transfère cette variable au module d'alimentation pour que celui-ci réduise l'énergie électrique délivrée à l'équipement électrique 13a.

Cette étape effectuée, le contrôleur 20 retourne à l'étape E300 précédemment décrite en attente d'une nouvelle action sur le clavier 23 du dispositif de contrôle ou pour vérifier si la touche 11b est toujours actionnée. Dans ce cas, les étapes E300 à E304 sont effectuées de la même manière que celle précédemment décrite.

Si les deux touches 11a et 11b sont simultanément appuyées, le contrôleur 20 passe à l'étape E305.

A cette étape, le moyen d'information 24 est activé. Cette activation correspond par exemple au clignotement d'une diode électroluminescente ou à l'activation d'un transducteur électroacoustique pour que celui-ci génère un signal sonore.

Cette opération effectuée, le contrôleur 20 passe ensuite à l'étape suivante E306 qui consiste à attendre la réception d'une trame de données d'un dispositif de commande 15 et ce par l'intermédiaire de l'antenne 26 et de l'interface radio 25.

A la réception d'une trame de données, le contrôleur 20 passe à l'étape E307.

Si aucune trame de données n'est reçue à cette étape et cela pendant un temps prédéterminé égal par exemple à trois minutes, le contrôleur 20 retourne à l'étape E300 précédemment décrite en désactivant le moyen d'information 24.

A l'étape E307, le contrôleur 20 lit, dans la trame de données reçue, l'identifiant de la télécommande ayant émis la trame de données. A titre d'exemple, la trame de données est émise par la télécommande 15b. L'identifiant est donc à la valeur Id2.

Ensuite, à l'étape E308, le contrôleur 20 lit dans la trame de données les informations représentatives du type de commande générée par le dispositif de commande distant, en l'occurrence, la télécommande 15b. Selon cet exemple, l'identifiant est à la valeur T2T.

Ensuite, à l'étape E309, le contrôleur 20 lit dans la trame de données l'indice I1 associé à la commande.

Cette opération réalisée, le contrôleur 20 vérifie à l'étape E310 si les informations représentatives du type de commande générée par le dispositif de commande distant, en l'occurrence, la télécommande 15b sont des informations représentatives de commande pour la mise de l'équipement 13a dans un état prédéterminé. Ceci est effectué en comparant ces informations à une constante ET représentative de cet état.

Selon notre exemple, les informations représentatives du type de commande générée par la télécommande 15b sont égales à T2T, le contrôleur 20 passe alors à l'étape suivante E313.

Cette opération réalisée, le contrôleur 20 mémorise à l'étape E313 l'identifiant Id2 lu à l'étape E307.

Ensuite, le contrôleur 20 mémorise à l'étape E314 les informations T2T représentatives du type de commande générée par la télécommande 15b lues à l'étape E308.

Ensuite, le contrôleur 20 mémorise à l'étape E315 l'indice I1 lu à l'étape E309. Enfin, le contrôleur 20 désactive le moyen d'information 24 et retourne à l'étape E300.

Selon l'algorithme tel que décrit précédemment, le dispositif de contrôle 10a a été associé à la télécommande 15b.

Par la suite, et comme cela sera explicité par la suite en référence à la Fig. 4, lorsque l'utilisateur appuiera sur une touche 16b ou 16c de la télécommande 15b, le dispositif de contrôle 10a exécutera la commande associée à l'appui sur la touche.

Il est à remarquer ici que le dispositif de contrôle 10b n'ayant pas été mis lui aussi dans le mode de configuration, aucune association n'existe entre le dispositif de contrôle 10b et la télécommande 15b.

Lorsque l'utilisateur appuie une nouvelle fois sur les touches 11a et 11b du dispositif de contrôle 11b, celui-ci effectue de la même manière les étapes E300 à E306 précédemment décrites.

A titre d'exemple, l'utilisateur a appuyé sur la touche 16a de la télécommande 15a.

A l'étape E307, le contrôleur 20 lit dans la trame de données l'identifiant Id1 de la télécommande 15a ayant émis la trame de données.

Ensuite, à l'étape E308, le contrôleur 20 lit dans la trame de données les informations ET représentatives du type de commande générée par la télécommande 15a.

Ensuite, à l'étape E309, le contrôleur 20 lit dans la trame de données l'indice I1 de la commande. Cette opération réalisée, le contrôleur 20 vérifie à l'étape E310 si les informations représentatives du type de commande générée par le dispositif de commande distant, en l'occurrence, la télécommande 15a sont des informations représentatives d'une commande pour la mise de l'équipement dans un état prédéterminé. Selon notre exemple, les informations représentatives du type de commande générée par la télécommande 15a sont égales à ET, le contrôleur 20 passe alors à l'étape suivante E311.

A cette étape, le contrôleur 20 lit la valeur de la variable Val représentative de l'énergie délivrée par le module 22 à l'équipement électrique 13a. Cette variable Val est une information représentative de l'état de l'équipement électrique, la valeur de cette variable ayant été définie précédemment aux étapes E300 à E303.

Ensuite, la valeur de la variable Val est mémorisée à l'étape E312.

Le contrôleur 20 passe ensuite aux étapes E315 à E318 précédemment décrites et mémorise ainsi, en association avec la valeur de la variable Val l'identifiant Id1 de la télécommande 15a ayant émis la trame de données, les informations ET représentatives du type de commande générée par la télécommande 15a et l'indice I1.

Selon l'algorithme tel que décrit précédemment, le dispositif de contrôle 10a a été associé à la télécommande 15a.

Par la suite, et comme cela sera explicité par la suite en référence à la Fig. 4, lorsque l'utilisateur appuiera sur la touche 16a de la télécommande 15a, le dispositif de contrôle 10a exécutera la commande associée à l'appui sur la touche, c'est-à-dire la commande pour le contrôle de l'équipement électrique dans l'état défini par la variable Val précédemment mémorisée.

Il est à remarquer ici que les télécommandes 15a et 15c s'associent au dispositif de contrôle 10b de la même manière que celle décrite précédemment pour les télécommandes 15a et 15b. Les indices associés aux commandes permettent au dispositif de commande 10b de distinguer les commandes générées par un appui sur les touches 16d ou 16e des commandes générées par un appui sur les touches 16f ou 16g.

Ces associations de télécommandes et de dispositifs de commande peuvent être effectuées de manière séquentielle, c'est-à-dire les une après les autres.

L'association de la télécommande 15a aux dispositifs de contrôle 10a et 10b peut aussi être effectuée avec un seul appui sur la touche 16a de la télécommande 15a si les deux dispositifs 10a et 10b ont été mis dans le mode de configuration avant l'appui sur la touche 15a.

Ainsi, plusieurs dispositifs de contrôle peuvent être associés à une même télécommande sans avoir recours aux moyens complexes de programmation de l'état de la technique.

Il est à remarquer aussi que la télécommande 16b associée au dispositif de contrôle 10a peut être utilisée pour ajuster l'énergie électrique délivrée à l'équipement électrique 13a de la même manière que celle décrite aux étapes E300 à E304 de l'algorithme. La valeur de la variable Val est ainsi modifiée.

La valeur de cette même variable Val est ensuite mémorisée lors de l'association de la télécommande 15a avec le dispositif de contrôle 10a.

Il est aussi à remarquer qu'en variante, lors de l'association de la télécommande 15a, la valeur de la variable Val peut être définie à la suite de l'étape E310 par des appuis sur une des touches 11a ou 11b du dispositif de contrôle 10a.

La Fig. 4 représente un algorithme de contrôle d'un équipement exécuté par un dispositif de contrôle d'équipements.

Le contrôleur 20 du dispositif de contrôle d'équipements électriques 10a lit à partir de sa mémoire 21 les instructions du programme correspondant aux étapes E400 à E412 de la Fig. 4 et les charge en mémoire vive pour les exécuter.

Cet algorithme est effectué en permanence par les dispositifs de contrôle 10a et 10b lorsque ceux-ci sont dans un mode de fonctionnement normal, c'est-à-dire tant que les touches 11a et 11b, respectivement 11c et 11d ne sont pas simultanément appuyées.

A l'étape E400, le contrôleur 20 attend la réception d'une trame de données d'un dispositif de commande et ce, par l'intermédiaire de l'antenne 26 et de l'interface radio 25.

A la réception d'une trame de données, le contrôleur 20 passe à l'étape E401.

A l'étape E401, le contrôleur 20 lit dans la trame de données l'identifiant de la télécommande ayant émis la trame de données. A titre d'exemple, la trame de données est émise par la télécommande 15c et est reçue par le dispositif de contrôle 10a. L'identifiant est donc à la valeur Id3.

Ensuite, le contrôleur 20 vérifie à l'étape E402 si l'identifiant Id3 est mémorisé en mémoire 21.

Selon notre exemple, seuls les identifiants Id1 et Id2 des télécommandes 15a et 15b sont mémorisés. Le test de l'étape E402 est négatif. Le dispositif de contrôle 10a n'étant pas associé à la télécommande 15c, celui-ci ne traite pas la trame reçue et retourne à l'étape E400 et attend la réception de nouvelles trames.

A la réception d'une nouvelle trame, le contrôleur 20 passe à l'étape E401.

A l'étape E401, le contrôleur 20 lit dans la trame de données l'identifiant de la télécommande ayant émis la trame de données. A titre d'exemple, la trame de données est émise par la télécommande 15b et est reçue par le dispositif de contrôle 10a. L'identifiant est donc à la valeur Id2.

L'identifiant Id2 étant mémorisé, le test de l'étape E402 est positif. Le dispositif de contrôle 10a est associé à la télécommande 15b, celui-ci passe à l'étape 403.

A l'étape E403, le contrôleur 20 lit dans la trame de données reçue les informations représentatives du type de commande générée par le dispositif de commande distant, en l'occurrence, la télécommande 15b. Selon cet exemple, l'identifiant est à la valeur T2T.

A l'étape suivante E404, le contrôleur 20 vérifie si les informations représentatives du type de commande générée par la télécommande 15b sont des informations représentatives de contrôle de l'équipement dans un état prédéterminé. Selon notre exemple, les informations représentatives du type de commande générée par la télécommande 15b sont égales à T2T, le contrôleur 20 passe alors à l'étape suivante E405.

A cette étape, le contrôleur 20 lit dans la trame de données l'indice associé à la commande actionnée par l'utilisateur. Selon cet exemple, l'indice est égal à I1.

Cette opération effectuée, le contrôleur 20 vérifie, à l'étape E406, si l'indice lu est identique à l'indice mémorisé. En effet, une télécommande, telle que la télécommande 15c peut comporter plusieurs commandes de même type. L'indice permet ainsi de différencier ces différentes commandes.

Si l'indice est différent, aucune action n'est effectuée, le contrôleur 20 retourne à l'étape E400 en attente d'une nouvelle trame.

Selon notre exemple, les indices étant identiques, le contrôleur 20 passe à l'étape E407.

A cette étape, le contrôleur 20 lit dans la trame de données deux informations booléennes représentatives des appuis sur les touches de la télécommande 15b. Lorsque par exemple la touche 16c est appuyée, la trame de données comporte ainsi les informations binaires 0 et 1 représentatives du non appui sur la touche 16b et d'un appui sur la touche 16c.

A partir de ces informations, le processeur 20 détermine la commande correspondante et commande, à l'étape E408, le module d'alimentation 22 pour que celui-ci transfère la totalité de l'énergie électrique à l'équipement électrique 13a conformément aux informations booléennes lues.

En variante, l'énergie électrique transférée à l'équipement électrique 13a est augmentée.

Cette opération réalisée, le contrôleur 20 retourne à l'étape E400 et attend la réception de nouvelles trames.

A la réception d'une nouvelle trame, le contrôleur 20 passe à l'étape E401.

A l'étape E401, le contrôleur 20 lit dans la trame de données l'identifiant de la télécommande ayant émis la trame de données. A titre d'exemple, la trame de données est émise par la télécommande 15a et est reçue par le dispositif de contrôle 10a. L'identifiant est donc à la valeur Id1.

L'identifiant Id1 étant mémorisé, le test de l'étape E402 est positif. Le dispositif de contrôle 10a étant associé à la télécommande 15a, celui-ci passe à l'étape 403.

A l'étape E403, le contrôleur 20 lit dans la trame de données les informations représentatives du type de commande générée par le dispositif de commande distant, en l'occurrence, la télécommande 15a. Selon cet exemple, l'identifiant est à la valeur ET.

A l'étape suivante E404, le contrôleur 20 vérifie si les informations représentatives du type de commande générée par la télécommande 15b sont des informations représentatives d'une commande pour le contrôle de l'appareil 13a dans un état prédéterminé. Selon notre exemple, les informations représentatives du type de commande générée par la télécommande 15a sont égales à ET, le contrôleur 20 passe alors à l'étape suivante E409.

A cette étape, le contrôleur 20 lit dans la trame de données reçue l'indice associé à la commande actionnée par l'utilisateur. Selon cet exemple, l'indice est égal à I1.

Cette opération effectuée, le contrôleur 20 vérifie, à l'étape E410, si l'indice lu est identique à l'indice mémorisé. En effet, une télécommande, telle que la télécommande 15c peut comporter plusieurs commandes de même type. L'indice permet ainsi de différencier ces différentes commandes.

Si l'indice est différent, aucune action n'est effectuée, le contrôleur 20 retourne à l'étape E400 en attente d'une nouvelle trame.

Selon notre exemple, les indices étant identiques, le contrôleur 20 passe à l'étape E411.

A cette étape, le contrôleur 20 lit la valeur de la variable Val mémorisée en association avec l'identifiant Id1 et l'indice I1.

Cette opération effectuée, le contrôleur 20 commande à l'étape E412 le module d'alimentation 22 pour que celui-ci transfère à l'équipement électrique 13a l'énergie électrique équivalente à la valeur de la variable Val précédemment lue.

Cette opération effectuée, le contrôleur 20 retourne à l'étape E400 et attend la réception d'une nouvelle trame de données.

Il est à remarquer ici que dans un mode préféré de réalisation, suite à la commande du module d'alimentation, le contrôleur 20 commande le moyen d'information 22 pour que celui-ci émette un signal visuel et/ou sonore de prise en compte de la commande. Ceci est particulièrement intéressant lorsque par exemple l'appareil électrique commandé est défectueux. L'utilisateur peut ainsi déterminer de façon certaine lequel du dispositif de contrôle ou de l'appareil électrique est défectueux.

Bien entendu, la présente invention n'est nullement limitée aux modes de réalisation décrits ici, mais englobe, bien au contraire, toute variante à la portée de l'homme du métier.

## Revendications

1. Procédé de configuration d'un dispositif de contrôle d'équipements (10a, 10b) pour l'association d'un dispositif de commande distant (15a, 15b, 15c) audit dispositif de contrôle d'équipements, **caractérisé en ce que** le procédé comporte les étapes, effectuées au niveau du dispositif de contrôle d'équipements, de :
- mise (E301) dans un mode de configuration du dispositif de contrôle,
- réception (E306) d'au moins une trame de données générée par un dispositif de commande distant, la trame de données comportant au moins un identifiant associé au dispositif de commande et des informations représentatives du type de commande générée par le dispositif de commande distant,
- mémorisation (E313, E314) de l'identifiant associé au dispositif de commande et des informations représentatives du type de commande générée par le dispositif de commande distant pour associer le dispositif de commande distant au dispositif de contrôle d'équipements.

2. Procédé selon la revendication 1, **caractérisé en ce que** le type de commande générée par le dispositif de commande distant est représentatif du nombre de touches (16) associées à ladite commande.

3. Procédé selon la revendication 2, **caractérisé en ce qu'**une unique touche (16a) du dispositif de commande est associée à ladite commande pour commander le contrôle de l'équipement dans un état prédéterminé.

4. Procédé selon l'une quelconque des revendications 1 à 3, **caractérisé en ce que** l'équipement est un équipement électrique et **en ce que** le dispositif de contrôle modifie l'énergie électrique délivrée audit équipement électrique pour contrôler ledit équipement électrique.

5. Procédé selon la revendication 4, **caractérisé en ce que** la ou chaque trame de données comporte en outre un indice représentatif d'une commande parmi un ensemble de commandes de même type que le dispositif de commande distant est apte à générer et **en ce que** l'indice est aussi mémorisé (E315).

6. Procédé selon la revendication 5, **caractérisé en ce que** l'état prédéterminé est l'état de l'équipement lors de la configuration du dispositif de contrôle et **en ce que** des informations représentatives de l'état de l'équipement électrique lors de la configuration du dispositif de contrôle sont mémorisées.

7. Procédé selon la revendication 6, **caractérisé en ce que** le procédé comporte en outre une étape de mise du dispositif de contrôle d'équipements dans un mode de contrôle de l'équipement suite à la mémorisation des données comprises dans la trame reçue ou des données comprises dans une trame reçue et des informations représentatives de l'état de l'équipement électrique lors de la configuration du dispositif de contrôle.

8. Procédé selon la revendication 6, **caractérisé en ce que** préalablement à la mémorisation des données comprises dans une trame reçue ou des données comprises dans une trame reçue et des informations représentatives de l'état de l'équipement lors de la configuration du dispositif de contrôle, le procédé comporte les étapes de :
- détermination de l'existence parmi les données précédemment mémorisées de données identiques aux données comprises dans une trame reçue,
- mémorisation des données comprises dans la trame reçue ou des données comprises dans la trame reçue et des informations représentatives de l'état de l'équipement électrique lors de la configuration du dispositif de contrôle, dans une zone mémoire distincte de chaque zone mémoire comprenant les données précédemment mémorisées s'il n'existe pas parmi des données précédemment mémorisées de données identiques aux données comprises dans la trame reçue,
- s'il existe parmi les données précédemment mémorisées des données identiques aux données comprises dans la trame reçue, mémorisation des données comprises dans la trame reçue ou des données comprises dans la trame reçue et des informations représentatives de l'état de l'équipement électrique lors de la configuration du dispositif de contrôle dans la zone mémoire comprenant les données identiques précédemment mémorisées.

9. Procédé selon l'une quelconque des revendications 1 à 8, **caractérisé en ce que** la trame de données reçue est une trame radio.

10. Procédé selon l'une quelconque des revendications 1 à 9, **caractérisé en ce que** le procédé comporte en outre une étape d'activation d'au moins un moyen de signalisation lorsque le dispositif de contrôle est dans le mode de configuration.

11. Procédé de contrôle d'un équipement par un dispositif de contrôle (10a, 10b), le dispositif de contrôle étant entre autres commandé par au moins un dispositif de commande (15a, 15b, 15c) distant, **caractérisé en ce que** le procédé comporte les étapes, effectuées par le dispositif de contrôle, de :
- réception (E400)d'au moins une trame de données générée par un dispositif de commande distant, la trame de données comportant au moins un identifiant associé au dispositif de commande et des informations représentatives du nombre de touches associées à la commande,
- détermination (E402) de l'existence parmi des données précédemment mémorisées de données identiques à une partie des données comprises dans la trame reçue comportant au moins l'identifiant,
- si des données identiques existent, contrôle (E408, E412) de l'équipement en fonction du nombre de touches associées et d'informations associées aux données mémorisées identiques à la partie des données comprises dans la trame reçue, les informations étant représentatives d'un état de l'équipement ou contrôle de l'équipement en fonction du nombre de touches associées et d'une autre partie des données comprises dans la trame reçue.

12. Procédé de commande d'un dispositif de contrôle (10a, 10b) par un dispositif de commande (15a, 15b, 15c) distant, le dispositif de contrôle contrôlant un équipement électrique, **caractérisé en ce que** le procédé comporte les étapes, effectuées par le dispositif de commande distant de :
- détection d'au moins un appui sur au moins une touche (16) du dispositif de commande distant,
- transfert d'au moins une trame de données comportant au moins un identifiant associé au dispositif de commande et des informations représentatives du nombre de touches associées à la commande générée par le dispositif de commande distant.

13. Procédé selon la revendication 12, **caractérisé en ce que** le type de commande générée par le dispositif de commande distant est représentatif du nombre de touches associées à ladite commande et **en ce que** la trame de données comporte en outre des informations sur chaque touche associée à ladite commande et un indice représentatif de la commande parmi l'ensemble de commandes de même type que le dispositif de commande distant est apte à générer.

14. Dispositif de contrôle d'équipements (10a, 10b) apte à être associé à un dispositif de commande (15a, 15b, 15c) distant, **caractérisé en ce que** le dispositif de contrôle d'équipements comporte :
- des moyens (20) de mise du dispositif de contrôle dans un mode de configuration,
- des moyens de réception (25, 26) d'au moins une trame de données générée par le dispositif de commande distant, la trame de données comportant au moins un identifiant associé au dispositif de commande et des informations représentatives du type de commande générée par le dispositif de commande distant,
- des moyens de mémorisation (21) de l'identifiant associé au dispositif de commande et des informations représentatives du type de commande générée par le dispositif de commande distant pour associer le dispositif de commande distant au dispositif de contrôle d'équipements.

15. Dispositif de contrôle d'équipements (10a, 10b), le dispositif de contrôle d'équipements étant entre autres commandé par au moins un dispositif de commande (15a, 15b, 15c) distant, **caractérisé en ce que** le dispositif de contrôle d'équipements comporte :
- des moyens de réception (25, 26) d'au moins une trame de données générée par un dispositif de commande distant, la trame de données comportant au moins un identifiant associé au dispositif de commande et des informations représentatives du nombre de touches associées à la commande,
- des moyens de détermination (20) de l'existence parmi les données précédemment mémorisées de données identiques à une partie des données comprises dans la trame reçue comportant au moins l'identifiant,
- des moyens de contrôle de l'équipement (20) en fonction du nombre de touches associées et d'informations associées aux données mémorisées identiques à la partie des données comprises dans la trame reçue, les informations étant représentatives d'un état de l'équipement, ou en fonction du nombre de touches associées et d'une autre partie des données comprises dans la trame reçue.

16. Dispositif de commande (15a, 15b, 15c) distant d'un dispositif de contrôle d'équipements électriques (10a, 10b), **caractérisé en ce que** le dispositif de commande distant comporte :
- des moyens de détection d'au moins un appui sur au moins une touche (16) du dispositif de commande distant,
- des moyens de transfert d'au moins une trame de données comportant au moins un identifiant associé au dispositif de commande et des informations représentatives du nombre de touches associées à la commande générée par le dispositif de commande distant.

## Claims

1. Method of configuring a device (10a, 10b) for controlling items of equipment to associate a remote-control device (15a, 15b, 15c) with the said device for controlling items of equipment, **characterized in that** the method comprises the steps, which are carried out at the device for controlling items of equipment, of:
- setting (E301) the controlling device to a configuring mode,
- receiving (E306) at least one data frame which is generated by a remote-control device, the data frame comprising at least one identifier which is associated with the controlling device and information which represents the type of controlling command generated by the remote-control device,
- storing (E313, E314) the identifier which is associated with the controlling device and the information which represents the type of controlling command generated by the remote-control device, to associate the remote-control device with the device for controlling items of equipment.

2. Method according to claim 1, **characterised in that** the type of controlling command generated by the remote-control device represents the number of keys (16) associated with the said controlling command.

3. Method according to claim 2, **characterised in that** a single key (16a) of the remote-control device is associated with the said controlling command to command the setting of the item of equipment to a predetermined state.

4. Method according to any one of claims 1 to 3, **characterised in that** the item of equipment is an electrical item of equipment and **in that** the device for controlling modifies the electrical energy supplied to the said electrical item of equipment in order to control the said electrical item of equipment.

5. Method according to claim 4, **characterised in that** the or each data frame also comprises an indicator which represents one controlling command among a set of controlling commands of the same type which the remote-control device is able to generate, and **in that** this indicator too is stored (E315).

6. Method according to claim 5, **characterised in that** the predetermined state is the state of the item of equipment at the time of configuring of the controlling device, and **in that** information representing the state of the electrical item of equipment at the time of configuring of the controlling device is stored.

7. Method according to claim 6, **characterised in that** the method also comprises a step of setting the device for controlling items of equipment to a mode of controlling the item of equipment following the storage of the data contained in the received frame, or of the data contained in a received frame and of the information representing the state of the electrical item of equipment at the time of configuring of the controlling device.

8. Method according to claim 6, **characterised in that**, prior to the storage of the data contained in the received frame, or of the data contained in a received frame and of the information representing the state of the electrical item of equipment at the time of configuring of the controlling device, the method comprises the steps of:
- determining whether data identical to the data contained in a received frame exists among the data previously stored,
- storing the data contained in the received frame, or the data contained in the received frame and the information representing the state of the electrical item of equipment at the time of configuring of the controlling device, in a memory zone separate from each memory zone which contains the data previously stored, if no data identical to the data contained in the received frame exists among the data previously stored,
- if data identical to the data contained in the received frame does exist among the data previously stored, storing the data contained in the received frame, or the data contained in the received frame and the information representing the state of the electrical item of equipment at the time of configuring of the controlling device, **in that** memory zone which contains the identical data stored previously.

9. Method according to any one of claims 1 to 8, **characterised in that** the data frame is a radio frame.

10. Method according to any one of claims 1 to 9, **characterised in that** the method also comprises a step of activating at least one indicating means when the controlling device is in the configuring mode.

11. Method by which a controlling device (10a, 10b) controls an item of equipment, the controlling device being controlled, amongst others, by at least one remote-control device (15a, 15b, 15c), **characterised in that** the method comprises the steps, which are carried out by the controlling device, of:
- receiving (E400) at least one data frame which is generated by the remote-control device, the data frame comprising at least one identifier which is associated with the controlling device and information which represents the number of keys associated with the controlling command,
- determining (E402) whether data identical to a portion of the data contained in the received frame which comprises at least one identifier exists among the data previously stored,
- if identical data does exist, controlling (E408, E412) the item of equipment as a function of the number of associated keys and of information associated with the stored data identical to the portion of the data contained in the received frame, the information representing a state of the item of equipment, or controlling the item of equipment as a function of the number of associated keys and of another portion of the data contained in the received frame.

12. Method by which a remote-control device (15a, 15b, 15c) controls a controlling device (10a, 10b), the controlling device controlling an electrical item of equipment, **characterised in that** the method comprises the steps, which are carried out by the remote-control device, of:
- detecting at least one press of at least one key (16) of the remote-control device,
- transferring at least one data frame containing at least one identifier which is associated with the remote-control device, and information which represents the number of keys associated with the controlling command generated by the remote-control device.

13. Method according to claim 12, **characterised in that** the type of controlling command generated by the remote-control device represents the number of keys associated with the said controlling command, and **in that** the data frame also comprises information on each key associated with the said controlling command and an indicator representing, among the set of controlling commands of the same type which the remote-control device is capable of generating, that controlling command.

14. Device (10a, 10b) for controlling items of equipment which is able to be associated with a remote-control device (15a, 15b, 15c), **characterised in that** the device for controlling items of equipment comprises:
- means (20) for setting the controlling device to a configuring mode,
- means (25, 26) for receiving at least one data frame which is generated by the remote-control device, the data frame comprising at least one identifier which is associated with the controlling device and information which represents the type of controlling command which is generated by the remote-control device,
- means (21) for storing the identifier which is associated with the controlling device and the information which represents the type of controlling command which is generated by the remote-control device, to associate the remote-control device with the device for controlling items of equipment.

15. Device (10a, 10b) for controlling items of equipment, the device for controlling items of equipment being controlled, amongst others, by at least one remote-control device (15a, 15b, 15c), **characterised in that** the device for controlling items of equipment comprises:
- means (25, 26) for receiving at least one data frame which is generated by a remote-control device, the data frame comprising at least one identifier which is associated with the controlling device and information which represents the number of keys associated with the controlling command,
- means (20) for determining whether data identical to a portion of the data contained in the received frame which comprises at least one identifier exists among the data previously stored,
- means (20) for controlling the item of equipment as a function of the number of associated keys and of information associated with the stored data which is identical to the portion of the data contained in the received frame, the information representing a state of the item of equipment, or as a function of the number of associated keys and of another portion of the data contained in the received frame.

16. Device (15a, 15b, 15c) for the remote control of a device (10a, 10b) for controlling electrical items of equipment, **characterised in that** the remote-control device comprises:
- means for detecting at least one press of at least one key (16) of the remote-control device,
- means for transferring at least one data frame containing at least one identifier which is associated with the controlling device, and information which represents the number of keys associated with the controlling command generated by the remote-control device.

## Patentansprüche

1. Verfahren zur Konfigurierung eines Kontrollgeräts für Einrichtungen (10a, 10b) zur Verbindung eines entfernt gelegenen Steuergeräts (15a, 15b, 15c) mit dem Kontrollgerät für Einrichtungen, **dadurch gekennzeichnet, dass** das Verfahren die folgenden Schritte umfasst, die im Kontrollgerät für Einrichtungen durchgeführt werden:
- Versetzen (E301) des Kontrollgeräts in einen Konfigurationsmodus,
- Empfangen (E306) von mindestens einem durch ein entfernt gelegenes Steuergerät erzeugten Datenrahmen, wobei der Datenrahmen mindestens eine Kennung, die mit dem Steuergerät verbunden ist, und Informationen umfasst, die für den Typ des durch das entfernt gelegene Steuergerät erzeugten Befehls charakteristisch sind,
- Speichern (E313, E314) der mit dem Steuergerät verbundenen Kennung und der Informationen, die für den Typ des durch das entfernt gelegene Steuergerät zum Verbinden des entfernt gelegenen Steuergeräts mit dem Gerät zur Kontrolle von Einrichtungen erzeugten Befehls charakteristisch sind.

2. Verfahren nach Anspruch 1, **dadurch gekennzeichnet, dass** der Typ des durch das entfernt gelegene Steuergerät erzeugten Befehls für die Anzahl der mit dem Befehl verbundenen Tasten (16) charakteristisch ist.

3. Verfahren nach Anspruch 2, **dadurch gekennzeichnet, dass** eine einzige Taste (16a) des Steuergeräts mit dem Befehl verbunden wird, um die Kontrolle der Einrichtung in einem vorbestimmten Zustand zu steuern.

4. Verfahren nach einem der Ansprüche 1 bis 3, **dadurch gekennzeichnet, dass** die Einrichtung eine elektrische Einrichtung ist und dass das Kontrollgerät die an die elektrische Einrichtung abgegebene elektrische Energie ändert, um die elektrische Einrichtung zu kontrollieren.

5. Verfahren nach Anspruch 4, **dadurch gekennzeichnet, dass** der oder jeder Datenrahmen ferner eine Kennziffer umfasst, die für einen Befehl unter einer Menge von Befehlen des gleichen Typs charakteristisch ist, zu deren Erzeugung das entfernt gelegene Steuergerät in der Lage ist, und **dadurch**, dass die Kennziffer auch gespeichert wird (E315).

6. Verfahren nach Anspruch 5, **dadurch gekennzeichnet, dass** der vorbestimmte Zustand der Zustand der Einrichtung bei der Konfigurierung des Kontrollgeräts ist, und **dadurch**, dass Informationen, die für den Zustand der elektrischen Einrichtung bei der Konfigurierung des Kontrollgeräts charakteristisch sind, gespeichert werden.

7. Verfahren nach Anspruch 6, **dadurch gekennzeichnet, dass** das Verfahren ferner nach der Speicherung der im empfangenen Rahmen enthaltenen Daten oder der in einem empfangenen Rahmen enthaltenen Daten und der Informationen, die für den Zustand der elektrischen Einrichtung bei der Konfigurierung des Kontrollgeräts charakteristisch sind, ferner einen Schritt zum Versetzen des Kontrollgeräts für Einrichtungen in einen Modus zur Kontrolle der Einrichtung umfasst.

8. Verfahren nach Anspruch 6, **dadurch gekennzeichnet, dass** das Verfahren vor der Speicherung der in einem empfangenen Rahmen enthaltenen Daten oder der in einem empfangenen Rahmen enthaltenen Daten und der Informationen, die für den Zustand der Einrichtung bei der Konfigurierung des Kontrollgeräts charakteristisch sind, die folgenden Schritte umfasst:
- Bestimmen, ob unter den vorhergehend gespeicherten Daten Daten vorhanden sind, die identisch mit den in einem empfangenen Rahmen enthaltenen Daten sind;
- Speichern der im empfangenen Rahmen enthaltenen Daten oder der im empfangenen Rahmen enthaltenen Daten und der Informationen, die für den Zustand der elektrischen Einrichtung bei der Konfigurierung des Kontrollgeräts charakteristisch sind, in einem Speicherbereich, der sich von jedem Speicherbereich unterscheidet, der die vorhergehend gespeicherten Daten enthält, wenn unter den vorhergehend gespeicherten Daten keine Daten vorhanden sind, die mit den im empfangenen Rahmen enthaltenen Daten identisch sind.
- wenn unter den vorhergehend gespeicherten Daten Daten vorhanden sind, die identisch mit den im empfangenen Rahmen enthaltenen Daten sind, Speichern der im empfangenen Rahmen enthaltenen Daten oder der im empfangenen Rahmen enthaltenen Daten und der Informationen, die für den Zustand der elektrischen Einrichtung bei der Konfigurierung des Kontrollgeräts charakteristisch sind, im Speicherbereich, der die vorhergehend gespeicherten identischen Daten enthält.

9. Verfahren nach einem der Ansprüche 1 bis 8, **dadurch gekennzeichnet, dass** der empfangene Datenrahmen ein Funkrahmen ist.

10. Verfahren nach einem der Ansprüche 1 bis 9, **dadurch gekennzeichnet, dass** das Verfahren ferner einen Schritt zur Aktivierung von mindestens einem Signalisierungsmittel umfasst, wenn das Kontrollgerät sich im Konfigurationsmodus befindet.

11. Verfahren zur Kontrolle einer Einrichtung durch ein Kontrollgerät (10a, 10b), wobei das Kontrollgerät unter anderem durch mindestens ein entfernt gelegenes Steuergerät (15a, 15b, 15c) gesteuert wird, **dadurch gekennzeichnet, dass** das Verfahren die folgenden, durch das Kontrollgerät durchgeführten Schritte umfasst:
- Empfangen (E400) von mindestens einem durch ein entfernt gelegenes Steuergerät erzeugten Datenrahmen, wobei der Datenrahmen mindestens eine Kennung, die mit dem Steuergerät verbunden ist, und Informationen umfasst, die für die Anzahl der mit dem Befehl verbundenen Tasten charakteristisch sind,
- Bestimmen (E402), ob unter den vorhergehend gespeicherten Daten Daten vorhanden sind, die identisch mit einem Abschnitt der im empfangen Rahmen enthaltenen Daten sind, die mindestens die Kennung umfassen,
- wenn identische Daten vorhanden sind, Kontrollieren (E408, E412) der Einrichtung in Abhängigkeit von der Anzahl der verbundenen Tasten und von Informationen, die mit den gespeicherten Daten verbunden sind, die identisch mit dem Abschnitt der im empfangenen Rahmen enthaltenen Daten sind, wobei die Informationen für einen Zustand der Einrichtung charakteristisch sind, oder Kontrollieren der Einrichtung in Abhängigkeit von der Anzahl der verbundenen Tasten und von einem anderen Abschnitt der im empfangenen Rahmen enthaltenen Daten.

12. Verfahren zur Steuerung eines Kontrollgeräts (10a, 10b) durch ein entfernt gelegenes Steuergerät (15a, 15b, 15c), wobei das Kontrollgerät eine elektrische Einrichtung kontrolliert, **dadurch gekennzeichnet, dass** das Verfahren die folgenden, durch das entfernt gelegene Steuergerät durchgeführten Schritte umfasst:
- Erkennen von mindestens einem Druck auf mindestens eine Taste (16) des entfernt gelegenen Steuergeräts,
- Übertragen von mindestens einem Datenrahmen, der mindestens eine Kennung, die mit dem Steuergerät verbunden ist, und Informationen umfasst, die für die Anzahl der mit dem durch das entfernt gelegenen Steuergerät erzeugten Befehle verbundenen Tasten charakteristisch sind.

13. Verfahren nach Anspruch 12, **dadurch gekennzeichnet, dass** der Typ des durch das entfernt gelegene Steuergerät erzeugten Befehls für die Anzahl der mit dem Befehl verbundenen Tasten charakteristisch ist, und **dadurch**, dass der Datenrahmen ferner Informationen über jede mit dem Befehl verbundene Taste und eine Kennziffer umfasst, die für den Befehl unter der Menge von Befehlen des gleichen Typs charakteristisch ist, zu deren Erzeugung das entfernt gelegene Steuergerät in der Lage ist.

14. Gerät zur Kontrolle von Einrichtungen (10a, 10b), das in der Lage ist, mit einem entfernt gelegenen Steuergerät (15a, 15b, 15c) verbunden zu sein, **dadurch gekennzeichnet, dass** das Gerät zur Kontrolle von Einrichtungen Folgendes umfasst:
- Mittel (20) zum Versetzen des Kontrollgeräts in einen Konfigurationsmodus,
- Mittel (25, 26) zum Empfangen von mindestens einem durch das entfernt gelegenen Steuergerät erzeugten Datenrahmen, wobei der Datenrahmen mindestens eine Kennung, die mit dem Steuergerät verbunden ist, und Informationen umfasst, die für den Typ des durch das entfernt gelegene Steuergerät erzeugten Befehls charakteristisch sind,
- Mittel (21) zum Speichern der mit dem Steuergerät verbundenen Kennung und der Informationen, die für den Typ des durch das entfernt gelegene Steuergerät zum Verbinden des entfernt gelegenen Steuergeräts mit dem Gerät zur Kontrolle von Einrichtungen erzeugten Befehls charakteristisch sind.

15. Gerät zur Kontrolle von Einrichtungen (10a, 10b) wobei das Gerät zur Kontrolle von Einrichtungen unter anderem durch ein entfernt gelegenes Steuergerät (15a, 15b, 15c) gesteuert wird, **dadurch gekennzeichnet, dass** das Gerät zur Kontrolle von Einrichtungen Folgendes umfasst:
- Mittel (25, 26) zum Empfangen von mindestens einem durch ein entfernt gelegenes Steuergerät erzeugten Datenrahmen, wobei der Datenrahmen mindestens eine Kennung, die mit dem Steuergerät verbunden ist, und Informationen umfasst, die für die Anzahl der mit dem Befehl verbundenen Tasten charakteristisch sind,
- Mittel (20) zum Bestimmen, ob unter den vorhergehend gespeicherten Daten Daten vorhanden sind, die identisch mit einem Abschnitt der im empfangenen Rahmen enthaltenen Daten sind, die mindestens die Kennung umfassen,
- Mittel (20) zur Kontrolle der Einrichtung in Abhängigkeit von der Anzahl der verbundenen Tasten und von Informationen, die mit den gespeicherten Daten verbunden sind, die identisch mit dem Abschnitt der Daten sind, die im empfangenen Rahmen enthalten sind, wobei die Informationen für einen Zustand der Einrichtung charakteristisch sind, oder in Abhängigkeit von der Anzahl der verbundenen Tasten und von einem anderen Abschnitt der im empfangenen Rahmen enthaltenen Daten.

16. Steuergerät (15a, 15b, 15c), das entfernt von einem Gerät zur Kontrolle elektrischer Einrichtungen (10a, 10b) gelegen ist, **dadurch gekennzeichnet, dass** das entfernt gelegene Steuergerät Folgendes umfasst:
- Mittel zum Erkennen mindestens eines Drucks auf mindestens eine Taste (16) des entfernt gelegenen Steuergeräts,
- Mittel zur Übertragung von mindestens einem Datenrahmen, der mindestens eine Kennung, die mit dem Steuergerät verbunden ist, und Informationen umfasst, die für die Anzahl der mit dem durch das entfernt gelegene Steuergerät erzeugten Befehl verbundenen Tasten charakteristisch sind.
